# EUROPEAN PATENT SPECIFICATION

(11) **EP 3 504 284 B1**
(45) Date of publication and mention of the grant of the patent: **27.01.2021**
(21) Application number: 17764343.4
(22) Date of filing: 24.08.2017
(51) Int. Cl.: C09D 183/04

(54) **PROCESS OF MAKING WATERBORNE LARGE-SIZE AND STABLE SILICONE RUBBER SUSPENSION AND EXCELLENT SENSORY MATTE COATING THEREBY**
VERFAHREN ZUR HERSTELLUNG VON WASSERBASIERTER GROSSFORMATIGER UND STABILER SILIKONKAUTSCHUKSUSPENSION UND MATTE BESCHICHTUNG MIT HERVORRAGENDER SENSORIK DARAUS
PROCÉDÉ DE PRÉPARATION D'UNE SUSPENSION AQUEUSE DE CAOUTCHOUC DE SILICONE DE GRANDE TAILLE ET STABLE ET EXCELLENT REVÊTEMENT MAT SENSORIEL CORRESPONDANT

(30) Priority: 25.08.2016 GB 201614616
(43) Date of publication of application: 03.07.2019
(73) Proprietor: Dow Toray Co., Ltd., Tokyo (JP); Dow Silicones Corporation, Midland, MI 48686-0994 (US)
(72) Inventor: LENOBLE, Bertrand Louis Julien, 7830 Silly (BE); WAKITA, Mari, Ichihara-shi Chiba 299-0108 (JP); LENOBLE, Bertrand Louis Julien, 7830 Silly (BE)
(74) Representative: Murgitroyd & Company
(86) International application number: PCT/EP2017/071390
(87) International publication number: WO 2018/037099

(56) References cited:
- EP-A1- 1 995 277
- EP-A2- 1 186 641
- WO-A1-2009/028433

## Description

### FIELD OF THE INVENTION

This invention relates to a method for making a silicone rubber suspension with silicone rubber particles which produces matting effect and excellent sensory feeling. More particularly, the invention is directed to a method of producing waterborne coating compositions that have silicone rubber suspension and method of reducing gloss by matte coating and giving sensory tactile feeling.

### BACKGROUND OF THE INVENTION

Japanese Laid Open Patent Application Number Hei 2-113079 (EP365009) discloses blending crosslinked silicone particles into coating compositions to produce coating compositions that form matte coatings.

Japanese Laid Open Patent Application Number Hei 5-9409 (US5708057) teaches a method for preparing waterborne coating compositions in which crosslinked silicone particles are blended as a waterborne suspension into water based coating compositions.

Japanese Laid Open Patent Application Number Hei 11-140191 teaches that waterborne crosslinked silicone particle suspensions of crosslinked silicone particles, nonionic surfactant, ionic surfactant, and water, can be blended into water based coating compositions.

European Patent EP1132443 (US6433041/JP4693953) teaches method a method for preparing water based coating compositions in which crosslinkable silicone composition containing an organopolysiloxane which has at least two silanol groups in its molecule. It also discloses addition of large amount of diluent water upon emulsification of components and benefits of creating small emulsion particle size such as and less variation of emulsion particle size.

Document EP 1 186 641 relates to silicone rubber suspensions to be used in coatings, that provide a low gloss. In these suspension the amount of alkyl silicate is higher than in the present suspensions and the amount of surfactant is too low.

Currently commercially available waterborne crosslinked silicone particle suspension does not provide excellent tactile sensation and provides only limited matting effect when used in coating.

### BRIEF SUMMARY OF THE INVENTION

One of objectives of this invention is to provide a method for preparing silicone rubber suspension with well dispersed, stable and large size silicone particles. One of objectives of this invention is to provide a waterborne silicone rubber suspension which provides matte coatings with excellent tactile sensation. One of objectives of this invention is to use said silicone rubber suspension to reduce gloss on surface of materials.

In particular, the inventive method for preparing silicone rubber comprising following steps:
1) a step of preparing emulsion, comprising the components:
   a) 100 parts by mass of an organosiloxane with viscosity between 20mPa • s and 1,000 mPa• s at 25 °C, having at least two silicone atom-bonded hydroxyl groups in a molecule;
   b) 3.0 - 10.0 parts by mass of organoalkoxysilane or partially hydrolysate thereof;
   c) 2.0 - 10.0 parts by mass of alkyl silicate;
   d) 0.001 - 1.5 parts by mass of a surfactant; and
   e) 50 - 200 parts by mass of water; and
2) a step of mixing the emulsion with following components:
   f) condensation reaction catalyst,
   g) 1. 2 - 30.0 parts by mass of a surfactant; and
   h) 0 - 1 5 parts by mass of water.

### BRIEF DESCRIPTION OF THE SEVERAL VIEWS OF THE DRAWING

Not applicable.

### DETAILED DESCRIPTION OF THE INVENTION

All amounts, ratios, and percentages are by weight unless otherwise indicated.

The articles 'a', 'an', and 'the' each refers to one or more, unless otherwise indicated by the context of the specification.

The term "alternatively" indicates a different and distinct embodiment. It might contain preferable embodiment or concept.

The term "comprises" and its variants (comprising, comprised of) are open ended.

The term "consists of' and its variants (consisting of) are closed ended.

The term "may" confers a choice, not an imperative.

The term "optionally" means is absent, or alternatively is present.

The present invention provides a process of preparing a silicone rubber suspension comprising following steps:
1) a step of preparing emulsion, comprising the components:
   a) 100 parts by mass of an organosiloxane with viscosity between 20 mPa · s and 1,000 mPa·s at 25 °C, having at least two silicone atom-bonded hydroxyl groups in a molecule;
   b) 3.0 - 10.0 parts by mass of organoalkoxysilane or partially hydrolysate thereof;
   c) 2.0 - 10.0 parts by mass of alkyl silicate;
   d) 0.001 - 1.5 parts by mass of a surfactant; and
   e) 50 - 200 parts by mass of water; and
2) a step of mixing the emulsion with following components:
   f) condensation reaction catalyst,
   g) 1 .2 - 30.0 parts by mass of a surfactant; and
   h) 0 - 15 parts by mass of water.

The silicone rubber suspension prepared by following Step 1 and 2 may have viscosity between 75, 80, 90, 100, 110, 120 or 130 mPa • s at minimum and/or 5000, 4500, 4000 3500, 3000, 2500, 2000, 1500 or 1,000 mPa • s at maximum. Optionally or preferably, thickener may be added to the emulsion in order to adjust the viscosity.

Examples of thickeners include, but are not limited to, acrylamide polymers and copolymers, acrylate copolymers and salts thereof (such as sodium polyacrylate), xanthan gum and derivatives, cellulose gum and cellulose derivatives (such as methylcellulose, methylhydroxypropylcellulose, hydroxypropylcellulose, polypropylhydroxyethylcellulose), starch and starch derivatives (such as hydroxyethylamylose and starch amylase), polyoxyethylene, carbomer, hectorite and hectorite derivatives, sodium alginate, arabic gum, cassia gum, guar gum and guar gum derivatives, cocamide derivatives, alkyl alcohols, gelatin, PEG- derivatives, saccharides (such as fructose, glucose) and saccharides derivatives (such as PEG- 120 methyl glucose diolate), and mixtures thereof.

The emulsion prepared by the Step 1 comprises, essentially consisting of, or consisting of components (a) - (e). Crosslinkable silicone composition comprises, essentially consists of, or consists of components (a) to (c).

Component (a) is the main or base component of condensation reaction taken place to create silicone rubber powder in suspension. It comprises organosiloxane having at least two silicone atom-bonded hydroxyl groups in a molecule. The silicone atom-bonded hydroxyl groups in component (A) are preferably present in the molecular chain terminal positions. Silicon atom-bonded organic groups in component (A) can be exemplified by substituted and unsubstituted monovalent hydrocarbyl groups among which are alkyl groups such as methyl, ethyl, propyl, and butyl; alkenyl groups such as vinyl and allyl; aryl groups such as phenyl; aralkyl groups such as benzyl and phenethyl; cycloalkyl groups such as cyclopentyl and cyclohexyl; and halogenated alkyl groups such as 3-chloropropyl and 3,3,3-trifluoropropyl. Preferably, the organosiloxane comprises polydimethylsiloxane.

The molecular structure of component (A) may be, for example, straight chain, partially branched straight chain, branched chain, or network. Preferably, it is straight chain or partially branched straight chain.

Viscosity of the component (a) is between 20 mPa · s and 1,000 mPa·s at 25 °C. Alternatively, the viscosity at 25 °C may be at least 30 mPa · s or 40 mPa · s. Also, upper limit of the viscosity at 25 °C may be 800 mPa· s, or 600 mPa· s. or 500 mPa· s.

Component (b) of organoalkoxysilane or partially hydrolysate thereof functions to crosslink crosslinkable silicone composition condensing with hydroxyl groups in component (a). Component (b) may contain at least three silicon atom-bonded hydrogen atoms in each molecule. The silicon atom-bonded hydrolyzable groups in component (b) may contain methoxy, ethoxy, or methoxyethoxy groups. Such examples may be methyltrimethoxysilane, ethyltrimethoxysilane, methyl tris(methoxyethoxy)silane, tetramethoxysilane, and tetraethoxysilane, and the partial hydrolysis and condensation products of these alkoxy silanes.

The emulsion contains volume of component (b) for 3.0 - 10.0 parts by mass per 100 mass parts of the component (a); alternatively, its volume may be 3.5 or 4.0 or 4.5 or 5.0 parts by mass at minimum and/or 9.0 or 8.5 or 8.0 or 7.5 parts by mass at maximum. The content of component (b) below the lower limit of the range may not provide sufficient hardness to silicone particle or create unstable silicone particle in the suspension; on the other hand, content of component (b) upper the limit may make particle size of silicone particle too small and/or may not render excellent tactile sensation to surface of coated materials.

Component (c) of alkyl silicate functions to crosslink crosslinkable silicone compositions and/or reinforce crosslinked silicone compositions, thereby creating appropriate three-dimensional crosslinking structure. The general formulae of the component (c) may be SiₙOₙ₋₁(OR)₂₍ₙ₊₁₎ (n is an integer and more than 1; R is independently selected alkyl group.) n may be 1 to 100: alternatively n may be 2, 3, 4, or 5 at minimum and 80, 60, 50, 40, 30, 20, 15 or 10 at maximum. R may be an alkyl group containing 1 to 12 carbons, or alternatively an alkyl group containing 1 to 6 carbons or alternatively methyl. Alkyl groups are exemplified as methyl, ethyl, propyl, butyl, hexyl, octyl, and decyl.

Specific examples of alkyl silicate are tetramethoxy silane, polymethoxy siloxane tetra-n-propoxysilane, pentyltrimethoxysilane, hexyltrimethoxysilane, and octyltrimethoxysilane; (meth)acryl functional alkoxysilanes such as 3-methacryloxypropyltrimethoxysilane, 3-methacryloxypropylmethyldimethoxysilane, and 3-methacryloxypropyldimethylmethoxysilane; epoxy functional alkoxysilanes among which are compositions such as 3-glycidoxypropyltrimethoxysilane, 3-glycidoxypropylmethyl dimethoxysilane, 2-(3,4-epoxycyclohexyl) ethyltrimethoxysilane, 2-(3,4-epoxycyclohexyl) ethylmethyl dimethoxysilane, 4-oxiranylbutyltrimethoxysilane, 4-oxiranylbutyltriethoxysilane, 4-oxiranylbutylmethyldimethoxysilane, 8-oxiranyloctyltrimethoxysilane, 8-oxiranyloctyltriethoxysilane, and 8-oxiranyloctylmethyldimethoxysilane; mercapto functional alkoxysilanes such as 3-mercaptopropyltrimethoxysilane and 3-mercaptopropylmethyldimethoxysilane; amino functional alkoxysilanes such as 3-aminopropyltrimethoxysilane, N-(2-aminoethyl)-3-aminopropyltrimethoxysilane, N-(2-aminoethyl)-3-aminopropylmethyl dimethoxysilane, and 3-anilinopropyltrimethoxysilane. The partial hydrolysis and condensation products of any of these compounds can also be employed

The emulsion contains volume of component (c) for 2.0 - 10.0 parts by mass per 100 mass parts of the component (a); alternatively, its volume may be 2.5 or 3.0 or 3.5 or 4.0 parts by mass at minimum and/or 9.0 or 8.5 or 8.0 or 7.5 parts by mass at maximum. The content of component (c) below the lower limit of the range may not provide sufficient hardness to silicone particle or create unstable silicone particle in the suspension or may not make well dispersed silicone particle; on the other hand, the content of component (c) over the limit may make particle size of silicone particle too small and/or may not render excellent tactile sensation to surface of coated materials.

Component (d) of surfactant functions to emulsify crosslinkable silicone composition in water. The surfactant may be cationic, nonionic, anionic and zwitterion (inner salt) or amphoteric. Among these, anionic surfactant may be preferred.

Examples of anionic surfactants include, but are not limited to, alkali metal, amine, or ammonium salts of higher fatty acids, alkylaryl sulphonates such as sodium dodecyl benzene sulfonate, long chain fatty alcohol sulfates, olefin sulfates and olefin sulfonates, sulfated monoglycerides, sulfated esters, sulfonated ethoxylated alcohols, sulfosuccinates, alkane sulfonates, phosphate esters, alkyl isethionates, alkyl taurates, alkyl sarcosinates, and mixtures thereof.

Specific examples of anionic surfactant include an alkylbenzene sulfonate salt such as hexylbenzene sulfonate, octylbenzene sulfonate, decylbenzene sulfonate, dodecylbenzene sulfonate, cetylbenzene sulfonate, and myristylbenzene sulfonate; sulfonate salts such as alkylnaphthalene sulfonates, sulfosuccinates, n-olefin sulfonates, and N-acyl sulfonates; carboxylate salts such as soaps, N-acylamino acid salts, polyoxyethylene carboxylates, polyoxyethylene alkyl ether carboxylates, and acylated peptides; sulfate ester salts such as sulfated oils, salts of alkyl sulfates, salts of alkyl ether sulfates, salts of polyoxyethylene sulfates, salts of sulfates of polyoxyethylene alkylaryl ethers, and salts of alkylamide sulfates; salts of alkyl phosphates, salts of polyoxyethylene phosphates, salts of polyoxyethylene alkyl ether phosphates, salts of polyoxyethylene alkylaryl ether phosphates; and mixtures thereof.

Further examples of anionic surfactants include carboxylates (sodium 2-(2-hydroxyalkyloxy)acetate)), amino acid derivatives (N-acylglutamates, N-acylglycinates or acylsarcosinates), alkyl sulfates, alkyl ether sulfates and oxyethylenated derivatives thereof, sulfonates, isethionates and N-acylisethionates, taurates and N-acyl N- methyltaurates, sulfosuccinates, alkylsulfoacetates, phosphates and alkyl phosphates, polypeptides, anionic derivatives of alkyl polyglycoside (acyl-D-galactoside uronate), and fatty acid soaps, and mixtures thereof.

Examples of cationic surfactants include, but are not limited to, alkylamine salts, quaternary ammonium salts, sulphonium salts, and phosphonium salts.

Examples of amphoteric surfactants include, but are not limited to, imidazoline compounds, alkylaminoacid salts, betaines, and mixtures thereof. Further examples of amphoteric and zwitterionic surfactants include betaines, N-alkylamidobetaines and derivatives thereof, proteins and derivatives thereof, glycine derivatives, sultaines, alkyl polyaminocarboxylates and alkylamphoacetates, and mixtures thereof.

Examples of suitable nonionic surfactants include, but are not limited to, condensates of ethylene oxide with long chain fatty alcohols or fatty acids such as a C12-16 alcohol, condensates of ethylene oxide with an amine or an amide, condensation products of ethylene and propylene oxide, esters of glycerol, sucrose, sorbitol, fatty acid alkylol amides, sucrose esters, fluoro-surfactants, fatty amine oxides, and mixtures thereof. Further examples of nonionic surfactants include polyoxyethylene fatty alcohols such as polyoxyethylene (23) lauryl ether, polyoxyethylene (4) lauryl ether; ethoxylated alcohols such as ethoxylated trimethylnonanol, C12-C14 secondary alcohol ethoxylates, ethoxylated, C10-Guerbet alcohol, ethoxylated, iso-C13 alcohol; poly(oxyethylene)-poly(oxypropylene)-poly(oxyethylene) tri-block copolymer (also referred to as poloxamers); tetrafunctional poly(oxyethylene)-poly(oxypropylene) block copolymer derived from the sequential addition of propylene oxide and ethylene oxide to ethylene diamine (also referred to as poloxamines), silicone polyethers, and mixtures thereof.

When mixtures containing nonionic surfactants are used, one nonionic surfactant may have a low Hydrophile-Lipophile Balance (HLB) and the other nonionic surfactant(s) may have a high HLB, such that the nonionic surfactants have a combined HLB of 1 1 -15, alternatively a combined HLB of 12.5-14.5.

Further examples of nonionic surfactants include polyoxyethylene alkyl ethers, polyoxyethylene alkylphenol ethers, polyoxyethylene lauryl ethers, straight-chain, primary alcohol alkoxylates, straight-chain secondary alcohol alkoxylates, alkyl phenol alkoxylates, olefinic alkoxylates, branched chain alkoxylates, polyoxyethylene sorbitan monoleates, polyoxyethylene alkyl esters, polyoxyethylene sorbitan alkyl esters, polyethylene glycol, polypropylene glycol, diethylene glycol, ethoxylated trimethylnonanols, polyoxyalkylene-substituted silicones (rake or ABn types), silicone alkanolamides, silicone esters, silicone glycosides, and mixtures thereof.

Further examples of nonionic surfactants include dimethicone copolyols, fatty acid esters of polyols, for instance sorbitol or glyceryl mono-, di-, tri- or sesquioleates or stearates, glyceryl or polyethylene glycol laurates; fatty acid esters of polyethylene glycol (polyethylene glycol monostearate or monolaurate); polyoxyethylenated fatty acid esters (stearate or oleate) of sorbitol; polyoxyethylenated alkyl (lauryl, cetyl, stearyl or octyl)ethers.

The emulsion contains volume of component (d) for 0.001- 1.5 parts by mass per 100 mass parts of the component (a); alternatively, its volume may be 0.002 or 0.01 or 0.05 parts by mass at minimum and/or 1.2 or 1.0 or 0.75 or 0.50 parts by mass at maximum. The content of component (d) below the lower limit of the range may not create silicone particle itself or even if it does, the particle or emulsion may not be stable; content of component (d) upper the limit may make particle size of silicone particle small and/or make the silicone particle and/or emulsion unstable.

The emulsion contains volume of component (e) water for 50 - 200 parts by mass per 100 mass parts of the component (a); alternatively, its volume may be 55 or 60 or 65 or 70 parts by mass at minimum and/or 150 or 120 or 100 or 90 or 80 or 75 parts by mass at maximum. Component (e) may function as phase inversion water; the content of component (e) below the lower limit of the range may not create silicone particle itself or even if it does, the particle or emulsion may not be stable; content of component (e) upper the limit may make the silicone particle and/or emulsion unstable, thereby creating consequently smaller particle size of emulsion.

Components (a) - (e) are mixed to homogeneity by using any method known in the art to mix materials by using emulsifying device such as a colloid mill, homomixer, or homogenizer. The absence of the condensation reaction catalyst (f) from the condensation reaction crosslinkable silicone composition enables thorough emulsification and even application of some heating during emulsification. The absence of the condensation reaction catalyst (f) from the condensation reaction crosslinkable silicone composition enables thorough emulsification and even application of some heating during emulsification.

The mixing may occur either as a batch, semi- continuous, or continuous process. Mixing may occur, for example using, batch mixing equipments with medium / low shear include change-can mixers, double-planetary mixers, conical-screw mixers, ribbon blenders, double-arm or sigma-blade mixers; batch equipments with high-shear and high-speed dispersers include those made by Charles Ross & Sons (NY), Hockmeyer Equipment Corp. (NJ); batch equipments with high shear actions include Banbury-type (CW Brabender Instruments Inc., NJ) and Henschel type (Henschel mixers America, TX). Illustrative examples of continuous mixers / compounders include extruders single-screw, twin-screw, and multi-screw extruders, co-rotating extruders, such as those manufactured by Krupp Werner & Pfleiderer Corp (Ramsey, NJ), and Leistritz (NJ); twin-screw counter-rotating extruders, two-stage extruders, twin-rotor continuous mixers, dynamic or static mixers or combinations of these equipments.

After preparing the emulsion in the Step 1), 0 -15 mass parts of water per 100 mass parts of the component (a) may be optionally added to dilute. Alternatively, its volume of water to be added may be 0.001 or 0.002, 0.01, 0.1, 1, 2, 3, 4 or 5 mass parts at the lower limit and/or 12, 10, 9, 8, or 7.5 mass parts at the upper limit.

To the emulsion prepared in the Step 1), mixtures comprising, essentially consisting of, or consisting of components (f) - (h) were added and mixed therein. Mixing method used herein is the same as one in the Step 1).

Component (f) of condensation reaction catalyst functions to crosslink crosslinkable compositions in the emulsion prepared in the step 1). Metal-containing or metal non-containing condensation catalyst may be used to promote condensation of silanol. A metal portion of the metal-containing condensation catalyst to be used in the present invention includes tin, titanium, zirconium, lead, iron cobalt, antimony, manganese, bismuth and zinc. As an example of such catalyst, a tin (II) salt of an organic acid catalyst (hereafter referred to as tin (II) salt) containing no more than ten carbon atoms to the emulsion as the condensation reaction catalyst (C) may be used. The use of an organotin compound or a tin (II) salt of an organic acid with more than ten carbon atoms encounters problems of inadequate crosslinking in the condensation reaction crosslinkable silicone composition, and failure of crosslinking to occur. The preferred tin (II) salt of an organic acid containing no more than ten carbon atoms may be preferably a tin (II) salt of a saturated aliphatic acid containing no more than ten carbon atoms, such as tin (II) acetate, tin (II) 2-ethylhexanoate, tin (II) neodecanoate, tin (II) 2,4-pentadionate, and tin (II) octanoate. Tin (II) octanoate is preferred among them.

Volume of component (f) condensation reaction catalyst may be 0.0001 - 20.0 parts by mass per 100 mass parts of the component (a): alternatively, its volume may be 0.001 or 0.01 or 0.1 or 0.5 or 1.0 or 1.5 or 2.0 or 5.0 parts by mass at minimum and/or 20.0 or 15.0 or 12.0 or 10.0 or 8.0 or 7.5 parts by mass at maximum. Addition of condensation reaction catalyst in an amount below the lower limit of the range runs the risk of failing to obtain an adequate acceleration of crosslinking in the condensation reaction crosslinkable silicone composition. Addition of condensation reaction catalyst in excess of the upper limit of the range runs the risk of compromising the physical properties of the crosslinked silicone particles obtained.

Component (g) of surfactant functions to emulsify component (f) of condensation reaction catalyst so that the condensation reaction catalyst would function properly upon being mixed with the emulsion. Examples of component (g) of surfactant are the same as ones exemplified as Component (d); however, as component (g), the same or different surfactant may be used.

Volume of component (g) surfactant is 1. 2 - 30.0 parts by mass per 100 mass parts of the component (a); alternatively, its volume may be 1.5 or 2.0 or 2.5 or 3.0 or 3.5 or 4.0 or 4.5 or 5.0 parts by mass at minimum and/or 25.0 or 20.0 or 18.0 or 15.0 or 12.0 or 10.0 or 9.5 or 9.0 or 8.5 or 8.0 parts by mass at maximum. The content of component (g) below the lower limit of the range may not provide sufficient emulsification of component (f) condensation reaction catalyst, thereby failing to create appropriate strength and hardness to silicone particle or create unstable silicone particle in the suspension; on the other hand, content of component (g) upper the limit may make particle size of silicone particle small and/or may not render excellent tactile sensation to surface of coated materials. The surfactant may be used for emulsification of the condensation reaction catalyst in an amount of 0.01 to 1,000 weight parts per 100 weight parts of the condensation reaction catalyst.

Component (h) of water functions to facilitate emulsification. Its volume is kept 0 - 15 parts by mass in order to avoid negatively influencing stability of emulsion particle; alternatively, its volume may be 0.1 or 0.3 or 0.5 or 0.8 or 1.0 or 1.2 or 1.5 parts by mass at minimum and/or 10 or 9.0 or 8.0 or 7.0 or 6.5 or 6.0 or 5.5 or 5.0 parts by mass at maximum.

Optionally, condensation reaction catalyst may be diluted in an organic solvent and then emulsified in water using an anionic surfactant. Ketone such as acetone and methyl ethyl ketone, or an alcohol containing no more than 4 carbon atoms such as methanol, ethanol, n-propanol, isopropanol, and tert-butanol may be used as such organic solvents with preference of lower alcohols.

The addition of condensation reaction catalyst, particularly, tin (II) salt, to the emulsion of the crosslinkable silicone composition accelerate the crosslinking reaction in the crosslinkable silicone composition. However, crosslinking will still proceed slowly when the temperature of the emulsion is too low. Conversely, the stability of the emulsion will be reduced when its temperature is too high. Therefore, addition of the tin (II) salt is done at preferably from 5 to 70° C.

Crosslinked silicone particles prepared according to the invention might have a spherical shape and an average particle size of 5.5 to 20 µm; preferably, average particle size may be 6.0 or 6.5 or 7.0 µm at minimum and/or 18.0 or 15.0 or 13.5 or 12.0 or 10.0 µm at maximum. The 90% distribution of the particle size by laser fraction method may fit in the range of equal to or less than 10, 9, 8, 7, 6, 5 or 4 µm from the mean. If the average particle size may be lower than the limit, matte effect decreases and may become unacceptable level. Also, pleasant sensory feeling will not be gained. If the average particle size become larger than the upper limit, distribution of particle size may become broader, creating non-uniformity and causing difficulty in quality control.

Silicone rubber particle prepared by process of the invention has narrow particle size distribution; this facilitates greater control of material property when used as coating composition or any other application.

In addition, the crosslinked silicone particles should have a type A durometer hardness of 10-95, as determined by Japanese Industrial Standard (JIS) K 6253-1997, preferably a hardness of 20-90, to avoid scratching or abrasion of organic resin film surfaces produced when the film is rubbed, and more preferably a hardness of 20-60 to render excellent sensory to surface of coated materials. Alternatively, the hardness may be JIS K 6253-1997 type A durometer hardness of 25 or 30 or 35 or 40 at minimum and/or the hardness of 55 or 50 or 45 at maximum.

Use of the silicone rubber particle of size as described in this specification in coating application exhibits great matte effect and excellent reduction of gloss. It further exhibits excellent sensory feeling.

The crosslinked silicone particles have capacity to impart an excellent impact resistance and blocking resistance to organic materials, including organic resins. In addition, the crosslinked silicone particles have capacity to impart to reduce gloss of material.

Waterborne coating compositions according to the invention comprise or essentially consist of silicone rubber powder suspension. Waterborne coating compositions comprise a coating resin component emulsified in water. Waterborne coating composition might have ability to form a coating or film upon drying or curing of the coating resin component when water is removed after its application.

### [Preparation of waterborne coating composition]

Silicone rubber suspension prepared by the claimed method is mixed with stabilizing additives to be coating composition. A stabilizing agent functions to improve retention and/or distribution of the silicone rubber particle of the present invention in a binder which functions to hold all components of the composition together when the substrate is coated. The coating composition may be 90% by weight polyurethane and 10% by weight of silicone rubber particle with stabilizing agents in suspension. Mixing may be achieved by a dental mixer operating at 2500 rpm for 1 minute. Presence of stabilizing agent above 5.0% of total composition of the coating composition would make silicone powder highly viscose (sticky), causing problem in flowability and dispersibility. Also, silane/silicone glycol, if exist, content transfer might occur in the coating formulation, which causes defects in the final coating.

The binder may comprise or consist of a polyurethane polymer, an acrylic polymer, a vinyl ether polymer, a poly(styrene-butadiene polymer), an alkyd resin, alkyd emulsion polymer, a phenolic resin, a polyvinyl acetate polymer, a nitrocellulose polymer, or any combination thereof. The binder may be provided as a dispersion in a solvent or water, for example a polyurethane dispersion in water and/or an acrylic polymer dispersion in a solvent. The binder may comprise from 30% to 99.5% of total weight of coating composition. The polyurethane was a commercially available water based polyurethane anionic dispersion of an aliphatic polycarbonate urethane (available from Picassian or Bayer).

The stabilizing agent may, for example, comprise or consist of a functionalized silane, a silazane, a wetting agent, or combinations thereof. The stabilizing agent may be silica, preferably hydrophilic silica for example Aerosil (R) fumed silica. Functionalized silanes may comprise or consist of amino functionalized silanes (such as aminoethylaminopropyltrimethoxysilane, aminopropyltriethoxysilane and aminopropyltrimethoxysilane), methacrylate or acrylate functionalized silanes (such as methacryloxypropyltrimethoxysilane), epoxy functionalized silanes (such as glycidoxypropyltrimethoxysilane), vinyl functionalized silanes (such as vinyltrimethoxysilane), ethoxy functionalized silanes (such as tetraethoxysilane and tetraethylorthosilicate). Preferably, the function of the functionalized silane is chosen for its compatibility with the binder. For example an epoxysilane is preferred for polyurethane (PU) binder, as epoxy is compatible with PU or an acrylic silane is chosen for an acrylic binder. The silazane may be hexamethyldisilazane.

The wetting agent may be any agent that has a Hydrophilic-lipophilic balance (HLB) that is higher than 6, optionally between 1 1 and 30. The HLB value may be calculated by the Griffin method (as incorporated herein by reference, Griffin, William C. (1954), "Calculation of HLB Values of Non-Ionic Surfactants", Journal of the Society of Cosmetic Chemists 5 (4): 249-56). The Griffin method calculate HLB as follows:-HLB = 20 ∗ Mh/M, where Mh is the molecular mass of the hydrophilic portion of the molecule, and M is the molecular mass of the whole molecule, giving a result on a scale of 0 to 20. An HLB value of 0 corresponds to a completely lipophilic/hydrophobic molecule, and a value of 20 corresponds to a completely hydrophilic/lipophobic molecule. As an example, suitable wetting agents may be a silicone polyether such as silicone glycol copolymer (e.g. a trisiloxane ethoxylate). Some combinations of the stabilising agent are particularly effective. For example, the use of a combination of a silicone polyether (such as trisiloxane ethoxylate) and an epoxy silane (such as glycidoxypropyltrimethoxysilane).

Optionally, the condensation reaction crosslinkable silicone composition or crosslinked silicone rubber suspension or waterborne coating composition comprising thereof may also contain other components among which are reinforcing fillers such as precipitated silica, fumed silica, calcined silica, and fumed titanium oxide; nonreinforcing fillers such as quartz powder, diatomaceous earth, abestos, aluminosilicate, iron oxide, zinc oxide, and calcium carbonate; fillers treated with organsilicon compounds such as organochlorosilanes, organoalkoxysilanes, organosilazanes, or organsiloxane oligomers; pigments; epoxy and/or amino functional organic compounds; heat stabilizers; flame retardants; plasticizers; and noncrosslinkable organopolysiloxanes.

Further additional components may include, but are not limited to, color treatments, thickeners, water phase stabilizing agents, pH controlling agents, preservatives and biocides, pigments, colorants, dyes, soil release agents, oxidizing agents, reducing agents, inorganic salts, antibacterial agents, antifungal agents, bleaching agents, sequestering agents, and mixtures thereof. Preferably, these additional components are aqueous. Preferably, such additional components may not require an additional step of using surfactants upon being mixed with silicone rubber suspension or coating composition.

Examples of thickeners include, but are not limited to, ones listed as examples of thickeners which may be used in the emulsion.

Examples of water phase stabilizing agents include, but are not limited to, electrolytes (e.g. alkali metal salts and alkaline earth salts, especially the chloride, borate, citrate, and sulfate salts of sodium, potassium, calcium and magnesium, as well as aluminum chlorohydrate, and polyelectrolytes, especially hyaluronic acid and sodium hyaluronate), polyols (glycerine, propylene glycol, butylene glycol, and sorbitol), alcohols such as ethyl alcohol, and hydrocolloids, and mixtures thereof.

Examples of pH controlling agents, but are not limited to, include any water soluble acid such as a carboxylic acid or a mineral acid such as hydrochloric acid, sulphuric acid, and phosphoric acid, monocarboxylic acid such as acetic acid and lactic acid, and polycarboxylic acids such as succinic acid, adipic acid, citric acid, and mixtures thereof.

Example of preservatives and biocides include, but are not limited to, paraben derivatives, hydantoin derivatives, chlorhexidine and its derivatives, imidazolidinyl urea, phenoxyethanol, silver derivatives, salicylate derivatives, triclosan, ciclopirox olamine, hexamidine, oxyquinoline and its derivatives, PVP-iodine, zinc salts and derivatives such as zinc pyrithione, glutaraldehyde, formaldehyde, 2-bromo-2-nitropropane-1,3-diol, 5-chloro-2-methyl-4-isothiazoline-3-one, 2-methyl-4-isothiazoline-3-one, and mixtures thereof.

Examples of pigments and colorants include, but are not limited to, surface treated or untreated iron oxides, surface treated or untreated titanium dioxide, surface treated or untreated mica, silver oxide, silicates, chromium oxides, carotenoids, carbon black, ultramarines, chlorophyllin derivatives and yellow ocher. Examples of organic pigments include, , but are not limited to, aromatic types including azo, indigoid, triphenylmethane, anthraquinone, and xanthine dyes which are designated as D&C and FD&C blues, browns, greens, oranges, reds, yellows, etc., and mixtures thereof. Surface treatments include those treatments based on lecithin, silicone, silanes, fluoro compounds.

A dye may generally be described as a colored substance that has an affinity to the substrate to which it is being applied. Examples of dyes include, but are not limited to, anionic dyes (for example a direct dye or an acid dye), reactive dyes, nonionic dyes (for example a disperse dye) or pigment dyes (for example a vat dye).

Examples of soil release agents include, but are not limited to, copolymeric blocks of terephthalate and polyethylene oxide or polypropylene oxide, and the like.

Examples of oxidizing agents include, but are not limited to, ammonium persulfate, calcium peroxide, hydrogen peroxide, magnesium peroxide, melamine peroxide, potassium bromate, potassium caroate, potassium chlorate, potassium persulfate, sodium bromate, sodium carbonate peroxide, sodium chlorate, sodium iodate, sodium perborate, sodium persulfate, strontium dioxide, strontium peroxide, urea peroxide, zinc peroxide, and mixtures thereof.

Examples of reducing agents include, but are not limited to, ammonium bisufite, ammonium sulfite, ammonium thioglycolate, ammonium thiolactate, cystemaine HCl, cystein, cysteine HCl, ethanolamine thioglycolate, glutathione, glyceryl thioglycolate, glyceryl thioproprionate, hydroquinone, p-hydroxyanisole, isooctyl thioglycolate, magnesium thioglycolate, mercaptopropionic acid, potassium metabisulfite, potassium sulfite, potassium thioglycolate, sodium bisulfite, sodium hydrosulfite, sodium hydroxym ethane sulfonate, sodium metabisulfite, sodium sulfite, sodium thioglycolate, strontium thioglycolate, superoxide dismutase, thioglycerin, thioglycolic acid, thiolactic acid, thiosalicylic acid, zinc formaldehyde sulfoxylate, and mixtures thereof.

Non-limiting examples of suitable inorganic salts include: MgCl₂, MgBr₂, MgCl₂, Mg(NO₃)₂, Mg₃(PO₄)₂, Mg₂P₂O₇, MgSO₄, magnesium silicate, NaI, NaBr, NaCl, NaF, Na₃(PO₄), NaSO₃,Na₂SO₄, Na₂SO₃, NaNO₃, NalO₃, Na₃(PO₄), Na₄P₂O₇, sodium silicate, sodium metasilicate, sodium tetrachloroaluminate, sodium tripolyphosphate (STPP), Na₂Si₃O₇, sodium zirconate, CaF₂,CaCl₂, CaBr₂,CaI₂, CaSO₄, Ca(NO₃)₂, Ca, KI, KBr, KCl, KF, KNO₃, KIO3, K₂SO₄, K₂SO₃, K₃(PO₄), K₄(P₂O₇), potassium pyrosulfate, potassium pyrosulfite, Lil, LiBr, LiCl, LiF, UNO₃, AlF₃, AlCl₃, AlBr₃, AlI₃, Al₂(SO₄)₃, Al(PO₄), Al(NO₃)₃, aluminum silicate; including hydrates of these salts and including combinations of these salts or salts with mixed cations e. g. potassium alum AlK(SO₄)₂ and salts with mixed anions, e. g. potassium tetrachloroaluminate and sodium tetrafluoroaluminate. Salts incorporating cations from groups IIIa, IVa, Va, VIa, VIIa, VIII, Ib, and IIb on the periodic chart with atomic numbers >13 are also useful in reducing dilution viscosity. Salts with cations from group Ia or IIa with atomic numbers >20 as well as salts with cations from the lactinide or actinide series are useful in reducing dilution viscosity. Mixtures of above salts are also useful.

Examples of antibacterial agents include, but are not limited to, chlorohexadiene gluconate, alcohol, benzalkonium chloride, benzethonium chloride, hydrogen peroxide, methylbenzethonium chloride, phenol, poloxamer 188, povidone-iodine, and mixtures thereof.

Examples of antifungal agents include, but are not limited to, miconazole nitrate, calcium undecylenate, undecylenic acid, zinc undecylenate, and mixtures thereof.

Examples of bleaching agents include, but are not limited to, chlorine bleaches such as chlorine, chlorine dioxide, sodium hypochlorite, calcium hypochlorite, sodium chlorate; peroxide bleaches such as hydrogen peroxide, sodium percarbonate, sodium perborate; reducing bleaches such as sodium dithionite, sodium borohydride; ozone; and mixtures thereof.

Examples of sequestering agents (also chealting agents) include, but are not limited to, phosphonates; amino carboxylic acid compounds (such as ethylenediamine tetraacetic acid (EDTA); N-hydroxyethylenediamine triacetic acid; nitrilotriacetic acid (NTA); and diethylenetriamine pentaacetic acid (DEPTA)); organo aminophosphonic acid compounds (such as ethylenediamine tetrakis (methylenephosphonic acid); 1 - hydroxyethane 1 ,1 -diphosphonic acid (HEDP); and aminotri (methylenephosphonic acid)); and mixtures thereof.

Examples of diluents include, but are not limited to, silicon containing diluents such as hexamethyldisiloxane, octamethyltrisiloxane, and other short chain linear siloxanes such as octamethyltrisiloxane, decamethyltetrasiloxane, dodecamethylpentasiloxane, tetradecamethylhexasiloxane, hexadeamethylheptasiloxane, heptamethyl-3-{(trimethylsilyl)oxy)}trisiloxane, cyclic siloxanes such as hexamethylcyclotrisiloxane, octamethylcyclotetrasiloxane, decamethylcyclopentasiloxane, dodecamethylcyclohexasiloxane; organic diluents such as butyl acetate, alkanes, alcohols, ketones, esters, ethers, glycols, glycol ethers, hydrofluorocarbons or any other material which can dilute the formulation without adversely affecting any of the component materials of the cosmetic composition.

Hydrocarbons include, but are not limited to, isododecane, isohexadecane, Isopar L (C11 - C13), Isopar H (C11 - C12), hydrogenated polydecene. Ethers and esters include, but are not limited to, isodecyl neopentanoate, neopentylglycol heptanoate, glycol distearate, dicaprylyl carbonate, diethylhexyl carbonate, propylene glycol n butyl ether, ethyl-3 ethoxypropionate, propylene glycol methyl ether acetate, tridecyl neopentanoate, propylene glycol methylether acetate (PGMEA), propylene glycol methylether (PGME), octyldodecyl neopentanoate, diisobutyl adipate, diisopropyl adipate, propylene glycol dicaprylate / dicaprate, and octyl palmitate. Additional organic diluents include, but are not limited to, fats, oils, fatty acids, and fatty alcohols.

Waterborne coating compositions according to the invention can be prepared simply by intermixing a water based coating composition with a separately prepared waterborne dispersion of cured condensation curable silicone particles. Water based coating compositions can also be prepared by producing the coating resin component in a waterborne dispersion of cured condensation curable silicone particles. When a water based coating composition having a high total solids concentration is desired, it is preferred to use a waterborne dispersion of cured condensation curable silicone particles that has a high concentration of cured condensation curable silicone particles, or to produce the coating resin component in the waterborne dispersion of cured condensation curable silicone particles. The level of addition of the waterborne crosslinked silicone particle suspension with respect to the water based coating composition is not critical, but the waterborne crosslinked silicone particle suspension is preferably used in an amount that provides 0.01 to 10 weight parts of crosslinked silicone particles from the suspension per 100 weight parts of solids in the coating composition.

Waterborne coating compositions according to the invention can be applied by coating methods used in the application of organic solvent based coating compositions, such as spray coating, electrostatic coating, immersion coating, curtain flow coating, roll coating, and shower coating.

### EXAMPLES

Viscosities in the examples were measured at 25 °C, and properties of the crosslinked silicone particles were measured using the following methods.

### Example 1

92.2 weight parts of hydroxyl terminated polydimethylsiloxane with 80 mPa·s of viscosity, 3.0 weight parts of ethylpolysilicate of the formula (C₂H₅O)₁₂Si₅O₄ produced by partial hydrolysis and condensation of tetraethoxysilane, and 4.8 weight parts of 3-glycidoxypropyltrimethoxysilane, were mixed to homogeneity. The mixture was emulsified in a waterborne solution of 70 weight parts of pure water and 0.2 weight part of sodium polyoxyethylene lauryl sulfate anionic surfactant. The mixture was further emulsified to homogeneity using a colloid mill. The condensation reaction catalyst emulsion was prepared by emulsification of one weight part tin (II) octanoate in a waterborne solution of 2.0 weight parts of pure water and 6.8 weight part sodium polyoxyethylene lauryl sulfate anionic surfactant. After emulsion of condensation reaction catalyst was added to emulsion of crosslinkable silicone composition, the combined emulsion mixture was allowed to stand for one day, which resulted in the production of a uniform and gel free waterborne suspension of crosslinked silicone particles. The composition was designated suspension and its viscosity was 138 mPa·s at 25 °C.

When suspension was filtered through a 200 mesh screen, the amount of retained crosslinked silicone particles was no more than 1.0 weight percent of the total amount filtered. The crosslinked silicone particles in suspension were rubbery and had a type A durometer hardness of 40 and a mean particle size of 7.1 µm. The same measurements were made to all the following examples and such results were shown in table 2 along with compositions.

### Comparative Example 1

84.7 weight parts of hydroxyl terminated polydimethylsiloxane with 40 mPa·s of viscosity, 10.5 weight parts of ethylpolysilicate of the formula (C₂H₅O)₁₂Si₅O₄ produced by partial hydrolysis and condensation of tetraethoxysilane, and 4.8 weight parts of 3-glycidoxypropyltrimethoxysilane, were mixed to homogeneity. Other process is the same as Example 1 except 4.8 weight part sodium polyoxyethylene lauryl sulfate anionic surfactant was added to tin (II) octanoate in a waterborne solution. The same evaluation test was conducted

### Comparative Example 2

The loaded amount of hydroxyl terminated polydimethylsiloxane, ethylpolysilicate, and 3-glycidoxypropyltrimethoxysilane were the same as Competitive Example 1. The mixture was emulsified in a waterborne solution of 70 weight parts of pure water and 4.0 weight part of sodium polyoxyethylene lauryl sulfate anionic surfactant. The mixture was further emulsified to homogeneity using a colloid mill, and diluted with 20 weight parts of pure water. Other process is the same as Example 1 except that 1.0 weight part sodium polyoxyethylene lauryl sulfate anionic surfactant was added to tin (II) octanoate in a waterborne solution. Viscosity of the obtained suspension was 58 mPa·s at 25 °C.

### Comparative Example 3

The loaded amount of hydroxyl terminated polydimethylsiloxane, ethylpolysilicate, and 3-glycidoxypropyltrimethoxysilane were same as Example 1. The mixture was emulsified in a waterborne solution of 70 weight parts of pure water and 4.0 weight part of sodium polyoxyethylene lauryl sulfate anionic surfactant. The mixture was further emulsified to homogeneity using a colloid mill, and diluted with 23.8 weight parts of pure water. Other process is same as Example 1 except 1.0 weight part sodium polyoxyethylene lauryl sulfate anionic surfactant was added to tin (II) octanoate in a waterborne solution.

### Comparative Example 4

The loaded amount of hydroxyl terminated polydimethylsiloxane, ethylpolysilicate, and 3-glycidoxypropyltrimethoxysilane were the same as Example 1. The mixture was emulsified in a waterborne solution of 70 weight parts of pure water and 0.2 weight part of sodium polyoxyethylene lauryl sulfate anionic surfactant. The mixture was further emulsified to homogeneity using a colloid mill, and diluted with 23.8 weight parts of pure water. Other process is the same as Example 1 except 1.0 weight part sodium polyoxyethylene lauryl sulfate anionic surfactant was added to tin (II) octanoate in a waterborne solution.

### Durometer of Crosslinked Silicone Particles

A crosslinked silicone sheet with a thickness of 1 cm was prepared by maintaining a condensation reaction catalyst containing condensation crosslinking silicone composition for one week at 25 °C to effect crosslinking. Type A durometer hardness was measured on the crosslinked silicone according to the protocol of JIS K 6253-1997 using a micro hardness testing device of H. W. Wallace Co.

### Average Particle Size of Crosslinked Silicone Particles

The average particle size was determined for a waterborne crosslinked silicone particle dispersion using a laser diffraction instrument for measuring particle size distributions. The instrument was a Model LS-230 of Beckman Coulter. The median diameter, i.e., the particle diameter corresponding to 50 percent of the cumulative distribution, was measured with the instrument and was used as the average particle size of the crosslinked silicone particles.

### Filtration Screening Test

Silicone rubber suspension was filtered through a 200 mesh screen, and the amount of retained crosslinked silicone particles was checked to see whether no more than 1.0 weight percent of the total amount filtered.

### Application Test

The silicone emulsion samples prepared in example 1 to comparative example 4 were evaluated as additives in an existing commercial acrylic binder Joncryl (R) ECO 2124 available from BASF.

### Preparation of the formulated binders:

50g of Joncryl (R) ECO 2124 was mixed with 8.93 g of the silicone emulsion generated using the example 1 to 4 (described above) to generate a solid content in the liquid binder of 10% silicone. The mixture was homogeneised in a high speed mixer rotating from Hauschild at 2700 rpm for 1 minute.

### Gloss measurement

The binder prepared above were applied on a leneta (R) application card. The gloss was measured on a coating applied using a manual baker film applicator at 4 different thicknesses 30, 60, 90 and 120 microns. The coating was dried in air at room temperature. After 24 hours drying, the gloss was measured at 60° visual angle using Elcometer 408 Gloss Meter. The desired performance is to reduce the gloss with an ideal value below 10 units.

### Sensory testing

A coating was formulated with a water based commercial polyurethane dispersion with 10% active silicone rubber particles obtained from Example 1 and Comparative Examples 1-4. The coating was applied on a flat test chart (Type Opacity 2C from Lenetta (R)) and dried in a conventional oven at 80°c for 2 minutes.

After 24 hours conditioning at room temperature, 8 panelists were asked to rank the coating from the best (receive a score of 5) to the worse (score of 1). The result was reviewed and statistically analyzed to evaluate its performance and reliability and then graded as follows:

| | |
|---|---|
| Excellent: | 3.7 or above |
| Good: | 3.3 or above, but below 3.7 |
| Average: | 2.9 or above, but below 3.3 |
| Not good: | 2.5 or above, but below 2.9 |
| Poor: | below 2.5 |

**Table 2:**

| | | **Example 1** | **Comparative Example 1** | **Comparative Example 2** | **Comparative Example 3** | **Comparative Example 4** |
|---|---|---|---|---|---|---|
| **Loaded amount (wt Parts)** | **hydroxyl terminated polysimethylsiloxane (40mPas)** | | **84.7** | **84.7** | | |
| | **hydroxyl terminated polysimethylsiloxane (80mPas)** | **92.2** | | | **92.2** | **92.2** |
| | **3-glycidoxypropyltrimethoxysilane** | **4.8** | **4.8** | **4.8** | **4.8** | **4.8** |
| | **ethylpolysilicate** | **3.0** | **10.5** | **10.5** | **3.0** | **3.0** |
| | **sodium polyoxyethylene lauryl sulfate** | **0.2** | **0.2** | **4.0** | **4.0** | **0.2** |
| | **water** | **70.0** | **93.8** | **70.0** | **70.0** | **70.0** |
| | **water** | | | **20.0** | **23.8** | **23.8** |
| | **tin (II) octanoate** | **1.0** | **1.0** | **1.0** | **1.0** | **1.0** |
| | **sodium polyoxyethylene lauryl sulfate** | **6.8** | **4.8** | **1.0** | **1.0** | **1.0** |
| | **water** | **2.0** | **2.0** | **2.0** | **2.0** | **2.0** |
| | **Proxel GXL (biocide)** | **0.3** | | | | |
| | **Proxel BD20 (biocide)** | | **0.3** | **0.3** | **0.3** | **0.3** |
| | **sodium polyoxyethylene lauryl sulfate** | | **2.0** | **2.0** | **2.0** | **2.0** |
| | **Hardness** | **40** | **80** | **80** | **40** | **40** |
| **Mean particle size(µm)** | | **7.1** | **5.8** | **2.0** | **4.1** | **6.8** |
| **Gross 60° 10%** | **30µm** | **-** | **10** | **18** | **14** | **9** |
| | **60µm** | **9** | **8** | **21** | **21** | **9** |
| | **90µm** | **12** | **10** | **20** | **23** | **10** |
| | **120µm** | **14** | **11** | **23** | **24** | **13** |
| **Gross 60° 20%** | **30µm** | **-** | **5** | **-** | **-** | **-** |
| | **60µm** | **4** | **2** | **-** | **-** | **-** |
| | **90µm** | **4** | **4** | **-** | **-** | **-** |
| | **120µm** | **5** | **3** | **-** | **-** | **-** |
| **Sensory** | | **excellent** | **average** | **poor** | **average** | **not good** |
| **Stability** | | **pass** | **pass** | **pass** | **fail** | **fail** |
| **Filtration** | | **pass** | **pass** | **pass** | **fail** | **fail** |
| **Visccosity (mPa·s)** | | **138** | **-** | **58** | **-** | **-** |

The above results show a combination of features of large particle size and low hardness of the particle provides the best combined performance. The process and formulation described in example 1 show the best combination of smooth surface and left little residue through filtration.

Other variations may be made in compounds, compositions, and methods described herein without departing from the essential features of the invention. The embodiments of the invention specifically illustrated herein are exemplary only and not intended as limitations on their scope except as defined in the appended claims.

### Industrial applicability

Claimed process of invention is useful to produce large size and stable crosslinked silicone rubber particle in suspension. Claimed silicone rubber suspension exhibits its advantage when used in coating composition because of its matte effect and excellent sensory nature. Because of such unique feature, the silicone rubber suspension may be used in coating which has physical contacts with human beings, such as chair, desk, musical instrument or clothing or leather or artificial leather.

## Claims

1. Process of preparing a silicone rubber suspension, comprising following steps:
1) a step of preparing emulsion, comprising the components:
a) 100 parts by mass of an organosiloxane with viscosity between 20mPa · s and 1,000 mPa· s at 25 °C, having at least two silicone atom-bonded hydroxyl groups in a molecule;
b) 3.0 - 10.0 parts by mass of organoalkoxysilane or partially hydrolysate thereof;
c) 2.0 - 10.0 parts by mass of alkyl silicate;
d) 0.001 - 1.5 parts by mass of a surfactant; and
e) 50 - 200 parts by mass of water;
2) a step of mixing the emulsion with following components:
f) condensation reaction catalyst,
g) 1.2 - 30.0 parts by mass of a surfactant; and
h) 0 - 15 parts by mass of water.

2. The process of preparing a silicone rubber suspension, wherein average particle size of silicone rubber particle in silicone rubber suspension of claim 1 is equal to or over 5.5 micrometer, measured by laser diffraction as defined in the description.

3. The process of preparing a silicone rubber suspension, wherein hardness of the silicone rubber particle of claim 2 is between JIS-A 20 and 60.

4. The process of preparing a silicone rubber suspension, wherein the surfactant of the claim 1 is anionic surfactant.

5. The process of preparing a silicone rubber suspension, wherein alkyl silicate of claim 1 is SiₙOₙ-₁(OR)₂₍ₙ₊₁₎ (n is an integer and more than 1; R is independently selected alkyl group).

6. The process of preparing a silicone rubber suspension, wherein 0 - 10.0 by mass of water is added to the emulsion of claim 1 after the step 1).

7. Silicone rubber suspension prepared by processes according to any one of claims 1-6.

8. Use of the silicone rubber suspension of claim 7 for reducing gloss on surface of material.

9. Waterborne coating composition comprising the silicone rubber suspension of the claim 7.

## Patentansprüche

1. Ein Verfahren zum Herstellen einer Silikonkautschuksuspension, das die folgenden Schritte beinhaltet:
1) einen Schritt des Herstellens von Emulsion, die die folgenden Komponenten beinhaltet:
a) 100 Massenteile eines Organosiloxans mit einer Viskosität zwischen 20 mPa·s und 1 000 mPa·s bei 25 °C, das mindestens zwei an Silikonatome gebundene Hydroxylgruppen in einem Molekül aufweist;
b) 3,0-10,0 Massenteile Organoalkoxysilan oder partielles Hydrolysat davon;
c) 2,0-10,0 Massenteile Alkylsilikat;
d) 0,001-1,5 Massenteile eines Tensids; und
e) 50-200 Massenteile Wasser;
2) einen Schritt des Mischens der Emulsion mit den folgenden Komponenten:
f) Kondensationsreaktionskatalysator,
g) 1,2-30,0 Massenteile eines Tensids; und
h) 0-15 Massenteile Wasser.

2. Verfahren zum Herstellen einer Silikonkautschuksuspension, wobei die durchschnittliche Teilchengröße des Silikonkautschukteilchens in der Silikonkautschuksuspension gemäß Anspruch 1 gleich oder größer als 5,5 Mikrometer ist, gemessen durch Laserbeugung wie in der Beschreibung definiert.

3. Verfahren zum Herstellen einer Silikonkautschuksuspension, wobei die Härte des Silikonkautschukteilchens gemäß Anspruch 2 zwischen JIS-A 20 und 60 liegt.

4. Verfahren zum Herstellen einer Silikonkautschuksuspension, wobei das Tensid gemäß Anspruch 1 ein anionisches Tensid ist.

5. Verfahren zum Herstellen einer Silikonkautschuksuspension, wobei das Alkylsilikat gemäß Anspruch 1 SiₙOₙ₋₁(OR)₂(ₙ₊₁) ist (n eine ganze Zahl und größer als 1 ist; R eine unabhängig ausgewählte Alkylgruppe ist).

6. Verfahren zum Herstellen einer Silikonkautschuksuspension, wobei nach dem Schritt 1) 0-10,0 Massenteile Wasser zu der Emulsion gemäß Anspruch 1 hinzugefügt werden.

7. Eine Silikonkautschuksuspension, die durch die Verfahren gemäß einem der Ansprüche 1-6 hergestellt ist.

8. Eine Verwendung der Silikonkautschuksuspension gemäß Anspruch 7 zum Verringern von Glanz auf Materialoberfläche.

9. Eine wässrige Beschichtungszusammensetzung, die die Silikonkautschuksuspension gemäß Anspruch 7 beinhaltet.

## Revendications

1. Procédé de préparation d'une suspension de caoutchouc de silicone, comprenant les étapes suivantes :
1) une étape de préparation d'émulsion, comprenant les constituants :
a) 100 parties en masse d'un organosiloxane pourvu d'une viscosité entre 20 mPa·s et 1 000 mPa·s à 25 °C, ayant au moins deux groupes hydroxyle liés à un atome de silicone dans une molécule ;
b) 3,0 à 10,0 partie en masse d'organoalcoxysilane ou d'hydrolysat partiel de celui-ci ;
c) 2,0 à 10,0 parties en masse de silicate d'alkyle ;
d) 0,001 à 1,5 parties en masse d'un tensioactif ; et
e) 50 à 200 parties en masse d'eau ;
2) une étape de mélange de l'émulsion avec les constituants suivants :
f) catalyseur de réaction de condensation,
g) 1,2 à 30,0 parties en masse d'un tensioactif ; et
h) 0 à 15 parties en masse d'eau.

2. Le procédé de préparation d'une suspension de caoutchouc de silicone, dans lequel la dimension moyenne de particule de particule de caoutchouc de silicone dans la suspension de caoutchouc de silicone de la revendication 1 est égale à ou au-dessus de 5,5 micromètres, mesurée par diffraction laser tel que défini dans la description.

3. Le procédé de préparation d'une suspension de caoutchouc de silicone, dans lequel la dureté de la particule de caoutchouc de silicone de la revendication 2 est entre 20 et 60 du JIS-A.

4. Le procédé de préparation d'une suspension de caoutchouc de silicone, dans lequel le tensioactif de la revendication 1 est un tensioactif anionique.

5. Le procédé de préparation d'une suspension de caoutchouc de silicone, dans lequel le silicate d'alkyle de la revendication 1 est SiₙOₙ₋₁ (OR)₂(ₙ₊₁) (n est un entier et supérieur à 1 ; R est un groupe alkyle sélectionné indépendamment).

6. Le procédé de préparation d'une suspension de caoutchouc de silicone, dans lequel 0 à 10,0 en masse d'eau est ajoutée à l'émulsion de la revendication 1 après l'étape 1).

7. Suspension de caoutchouc de silicone préparée par des procédés selon n'importe laquelle des revendications 1 à 6.

8. Utilisation de la suspension de caoutchouc de silicone de la revendication 7 pour réduire la brillance sur une surface de matériau.

9. Composition de revêtement à base d'eau comprenant la suspension de caoutchouc de silicone de la revendication 7.
